# EUROPÄISCHE PATENTANMELDUNG

(11) **EP 4 729 913 A1**
(43) Veröffentlichungstag der Anmeldung: **22.04.2026**
(21) Anmeldenummer: 25202621.6
(22) Anmeldetag: 17.09.2025
(51) Int. Cl.: G01M 13/021

(54) **VERFAHREN ZUM ERMITTELN VON EINER BELASTUNG AN EINEM LAGER EINES ZAHNRADS EINES GETRIEBES, VORRICHTUNG UND GETRIEBE MIT EINER VORRICHTUNG**

(30) Priorität: 15.10.2024 DE 102024209976
(71) Anmelder: ZF Friedrichshafen AG, 88046 Friedrichshafen (DE); ZF Wind Power Antwerpen NV, 3920 Lommel (BE)
(72) Erfinder: Pineros, Mauricio, 80336 Munich (DE); Ortmann, Sebastian, 97816 Lohr (DE); Schmidt, Sebastian, 97225 Zellingen (DE)
(74) Vertreter: ZF Friedrichshafen AG

(57) **Zusammenfassung**

Die vorliegende Erfindung betrifft ein Verfahren zum Ermitteln von einer Belastung an einem Lager (5) eines Zahnrads (4) eines Getriebes (1). Das Verfahren umfasst ein Ermitteln einer Zahnradeingriffsfrequenz (S1) an einem Zahnradeingriff (8) des Zahnrads (4) des Getriebes (1) basierend auf einem Beschleunigungssignal des Getriebes (1) und ein Ermitteln einer Belastung (S2) des Lagers (5) basierend auf der ermittelten Zahnradeingriffsfrequenz und einem Referenzwert. Weiterhin sind eine Vorrichtung (2), sowie ein Getriebe (1) mit einer Vorrichtung (2) offenbart.

## Beschreibung

### Technisches Gebiet

Die vorliegende Erfindung bezieht sich auf ein Verfahren zum Ermitteln von einer Belastung an einem Lager eines Zahnrads eines Getriebes, eine Vorrichtung und ein Getriebe mit einer Vorrichtung.

### Stand der Technik

Aus dem Stand der Technik sind Verfahren zum Ermitteln von Lagerausfällen bekannt. Diese Verfahren umfassen das Ermitteln von Frequenzen, die mit einem Ausfall eines Innenrings oder eines Außenrings des Lagers, eines Wälzkörpers des Lagers oder eines Käfigs des Lagers verbunden sind. Die hierbei ermittelten Frequenzen werden auch als Lagerausfallfrequenzen bezeichnet.

### Darstellung der Erfindung

Ein erster Aspekt betrifft ein Verfahren zum Ermitteln von einer Belastung an einem Lager eines Zahnrads eines Getriebes.

Das Getriebe kann jede Art von Getriebe sein, das einen Zahnradeingriff bereitstellt. Das Getriebe kann beispielsweise ein Planetengetriebe sein. Das Zahnrad des Getriebes kann sich im Zahnradeingriff mit einem anderen Zahnrad des Getriebes befinden. Das Lager des Zahnrads kann von der Art des Getriebes und der Betriebsbedingungen abhängen. Bei einem Planetengetriebe kann das Zahnrad ein Planetenrad des Planetengetriebes sein. In diesem Fall kann das Planetenrad beispielsweise im Zahnradeingriff mit einem Hohlrad des Planetengetriebes sein. Das Lager des Zahnrads kann ein Lager des Planetenrads sein. Das Lager kann beispielsweise ein Rollenlager, ein Gleitlager, ein Nadellager oder ein Kugellager sein.

Die Belastung am Lager kann einen Schaden des Lagers indizieren. Die Belastung kann somit indikativ für einen Ausfall des Lagers sein. Die Belastung am Lager kann eine Beschädigung des Lagers indizieren. Die Belastung kann somit indikativ für einen drohenden Ausfall des Lagers sein. Die Belastung kann eine Verformung des Zahnrads und somit eine Kraftverschiebung weg von einer Referenzkraftwirkung im Zahnradeingriff beschreiben.

Das Verfahren umfasst ein Ermitteln einer Zahnradeingriffsfrequenz an einem Zahnradeingriff des Zahnrads des Getriebes basierend auf einem Beschleunigungssignal des Getriebes.

Die Zahnradeingriffsfrequenz kann eine Schwingung, verursacht durch den Zahnradeingriff, beschreiben. Die Zahnradeingriffsfrequenz kann eine Güte eines Zahnradeingriffs, beispielsweise die Güte einer Kraftwirkung im Zahnradeingriff, beschreiben. Die Zahnradeingriffsfrequenz kann eine Trägerfrequenz, ein oberes Seitenband und ein unteres Seitenband umfassen.

Das Beschleunigungssignal kann eine Beschleunigung einer Schwingung des Getriebes umfassen. Das Beschleunigungssignal kann repräsentativ für die Beschleunigung der Schwingung des Lagers sein. Das Beschleunigungssignal kann mittels eines Sensors erfasst werden. Das Beschleunigungssignal kann erhalten werden. Das Erhalten kann ein Auslesen, beispielsweise aus einer Datenbank, umfassen.

Das Verfahren umfasst ein Ermitteln einer Belastung des Lagers basierend auf der ermittelten Zahnradeingriffsfrequenz und einem Referenzwert.

Die ermittelte Zahnradeingriffsfrequenz des Lagers kann indikativ für die Belastung sein. Beispielsweise kann eine Veränderung des Laufs des Lagers eine Abweichung der ermittelten Zahnradeingriffsfrequenz zu dem Referenzwert erzeugen. Diese Abweichung kann indikativ für ein abweichendes Verhalten des Lagers sein. Die Abweichung kann somit indikativ für eine Belastung des Lagers sein. Das Maß der Abweichung kann indikativ für ein Maß der Belastung sein.

Der Referenzwert kann eine Zahnradeingriffsfrequenz des Lagers in einem unbeschädigten Zustand beschreiben. Der Referenzwert kann beispielsweise aus einer Datenbank erhalten werden. Der Referenzwert kann, beispielsweise bei einer kontinuierlichen Überwachung, beispielsweise zu Beginn der Überwachung, erfasst und lesbar abgespeichert werden, beispielsweise in einer Datenbank. Hierdurch kann die für den Zahnradeingriff spezifische Zahnradeingriffsfrequenz erfasst und als Referenzwert für die kontinuierliche Messung verwendet werden.

Durch das Verfahren können Vibrationen erfasst und so verarbeitet werden, dass ein Detektieren der Belastung des Lagers möglich ist. Das Verfahren kann somit eine Möglichkeit bereitstellen, Schwingungen in einem Lager zu detektieren und hierdurch einen Lagerausfall zu erkennen. Die Belastung kann bereits in einem Stadium auftreten, in dem noch kein physischer Schaden am Lager vorliegt und somit ein Impuls der Beschädigung nicht im Bereich der Lagerausfallfrequenzen liegt. Ein durch die Belastung auftretender Frequenzbereich kann niedriger sein als eine Rotationsfrequenz des Lagers. Das Verfahren kann somit insbesondere potenziell schädliche Schwingung in einem niedrigen Frequenzbereich und frühzeitig beim Ermitteln der Belastung des Lagers erfassen und berücksichtigen. Dies ermöglicht eine frühzeitige Erkennung von Belastungen am Lager, die auf einen drohenden Ausfall des Lagers hindeuten können. Somit kann durch das Verfahren ein Wartungsaufwand verringert werden, da Lager frühzeitig ausgetauscht werden können, um so einen sicheren Betrieb und optimalen Zahnradeingriff zu ermöglichen.

In einer Ausführungsform kann das Beschleunigungssignal eine Beschleunigung einer Schwingung an einem Gehäuse des Getriebes sein.

Die Beschleunigung der Schwingung am Gehäuse des Getriebes kann so an einer Stelle am Gehäuse gemessen werden, dass die Messung repräsentativ für die Beschleunigung der Schwingung am Zahnradeingriff ist. Die Beschleunigung der Schwingung am Gehäuse des Getriebes kann so an einer Stelle am Gehäuse gemessen werden, dass das gemessene Signal die Beschleunigung der Schwingung am Zahnradeingriff möglichst isoliert repräsentiert. Isoliert kann hier als störungsarm oder störungsfrei verstanden werden. Isoliert kann auch als Minimieren von überlagerten Rauschsignalen verstanden werden. Es kann denkbar sein, dass die Messung an oder in der Nähe des Zahnradeingriffs erfolgt.

Hierdurch kann eine möglichst repräsentative Messung für die Beschleunigung der Schwingungen am Zahnradeingriff erhalten werden.

In einer Ausführungsform kann der Zahnradeingriff ein Zahnradeingriff eines Planetenrads eines Planetengetriebes mit einem Hohlrad des Planetengetriebes sein und das Lager ein Lager des Planetenrads sein.

Das Ermitteln einer Belastung des Lagers des Planetenrads und folglich eine drohende Ausfallerkennung kann eine längere Ausfallzeit des Planetengetriebes verhindern.

In einer Ausführungsform kann das Ermitteln der Zahnradeingriffsfrequenz ein Filtern des Beschleunigungssignals umfassen.

Der Filter kann ein Frequenzfilter sein, beispielsweise ein Bandpassfilter. Die relevanten Frequenzen können vom Getriebe abhängen. Folglich kann der Bereich, in dem das Beschleunigungssignal gefiltert wird, in Abhängigkeit des Getriebes variiert werden. Dies ermöglicht ein variables Filtern des Beschleunigungssignals in Abhängigkeit des verwendeten Getriebes.

Hierdurch kann das Beschleunigungssignal auf relevante Frequenzen reduziert werden. Dies kann die Menge an Daten des Beschleunigungssignals, die weiterverarbeitet werden, reduzieren. Dies kann einen Prozess der Weiterverarbeitung der Daten beschleunigen.

Weiterhin kann das Ermitteln der Zahnradeingriffsfrequenz ein Zerlegen des gefilterten Beschleunigungssignals in ein Phasensignal und ein Amplitudensignal umfassen.

Hierdurch kann das Beschleunigungssignal in eine analytische Form umgewandelt werden. Das zerlegte Beschleunigungssignal kann sowohl eine Kombination aus einer Amplitudeninformation und einer Phaseninformation aufweisen. Die Amplitudeninformation kann das Amplitudensignal sein. Die Phaseninformation kann das Phasensignal sein. Das Zerlegen des Beschleunigungssignals kann beispielsweise mittels einer Hilbert Transformation erfolgen. Hierdurch können Frequenzen, die im Zeitbereich nur schwer detektierbar sind, beispielsweise aufgrund eines Rauschsignals, das dem Beschleunigungssignal überlagert ist, durch Transformation des gefilterten Beschleunigungssignals in den Frequenzbereich detektierbar gemacht werden.

Weiterhin kann das Ermitteln der Zahnradeingriffsfrequenz ein Extrahieren des Amplitudensignals basierend auf dem zerlegten Beschleunigungssignal umfassen.

Wie oben beschrieben, liegt das zerlegte Beschleunigungssignal in Form einer Kombination aus dem Phasensignal und dem Amplitudensignal vor. Diese beiden Informationen sind durch das Zerlegen trennbar miteinander verbunden. Beispielsweise kann durch Ermitteln eines Absolutwerts des zerlegten Beschleunigungssignals das Amplitudensignal extrahiert werden. Das Amplitudensignal kann indikativ für die maximale Auslenkung des Beschleunigungssignals und somit die Intensität der Beschleunigung der Schwingung am Zahnradeingriff beschreiben.

Weiterhin kann das Ermitteln der Zahnradeingriffsfrequenz ein Ermitteln des Frequenzspektrums des extrahierten Amplitudensignals umfassen.

Dieser Schritt kann beispielsweise mittels einer Fourier Transformation oder schnellen Fourier Transformation, auf Englisch auch Fast Fourier Transformation genannt, durchgeführt werden. Hierdurch kann das extrahierte Amplitudensignal in die Frequenzanteile zerlegt werden, um darauf aufbauend die Verteilung von Frequenzkomponenten des Amplitudensignals ermitteln zu können.

Weiterhin kann das Ermitteln der Zahnradeingriffsfrequenz ein Ermitteln der Zahnradeingriffsfrequenz basierend auf dem ermittelten Frequenzspektrum umfassen.

Das ermittelte Frequenzspektrum kann beschreiben, welche Frequenzen mit welcher Intensität im extrahierten Amplitudensignal vorliegen. Hieraus kann die Zahnradeingriffsfrequenz ermittelt werden.

In einer Ausführungsform kann das Filtern des Beschleunigungssignals ein Bandpassfiltern des Beschleunigungssignals sein. Das Zerlegen des gefilterten Beschleunigungssignals in ein Phasensignal und ein Amplitudensignal kann eine Hilbert Transformation des gefilterten Beschleunigungssignals sein. Das Extrahieren des Amplitudensignals basierend auf dem zerlegten Beschleunigungssignal kann ein Bestimmen des Absolutwerts des zerlegten Beschleunigungssignals sein. Das Ermitteln des Frequenzspektrums kann ein Anwenden einer schnellen Fourier-Transformation basierend auf dem Absolutwert sein. Das Ermitteln der Zahnradeingriffsfrequenz basierend auf dem ermittelten Frequenzspektrum kann ein Ermitteln der Zahnradeingriffsfrequenz basierend auf einer Ausgabe der schnellen Fourier-Transformation sein.

In einer Ausführungsform kann das Filtern des Beschleunigungssignals ein Ermitteln eines Effektivwertsignals des Beschleunigungssignals und ein Filtern des Effektivwertsignals umfassen.

Das Effektivwertsignal kann ein Effektivwert des Beschleunigungssignals sein. Das Effektivwertsignal kann somit eine durchschnittliche Leistung des

Beschleunigungssignals beschreiben. Das Effektivwertsignal kann mittels eines quadratischen Mittelwerts, auf Englisch auch Root Mean Square (RMS) genannt, ermittelt werden. Die Verwendung des Effektivwertsignals kann zu einer Rauschunterdrückung beitragen.

In einer Ausführungsform kann vor dem Schritt des Extrahierens des Amplitudensignals ein Schritt der Signalaufbereitung durch Addieren des gefilterten

### Beschleunigungssignals und des zerlegten Beschleunigungssignals erfolgen.

Durch die Zerlegung kann das Signal einen Rauschanteil aufweisen, der zu einer Verschlechterung der Signalqualität führen kann. Das Addieren des gefilterten Beschleunigungssignals und des zerlegten Beschleunigungssignals im Schritt der Signalaufbereitung kann das Rauschen unterdrücken oder zumindest reduzieren. Das Addieren des gefilterten Beschleunigungssignals und des zerlegten Beschleunigungssignals kann zu einer Verstärkung der Signalstärke führen. Dies kann auch ein verbessertes Signal-Rausch-Verhältnis, auf Englisch auch Signal-to-noise ratio (SNR) genannt, bewirken. Dies kann eine Verstärkung des Amplitudensignals bewirken. Das Extrahieren des Amplitudensignals kann somit basierend auf einer Summe der beiden addierten Signale erfolgen. Hierdurch kann die Signalqualität verbessert werden. Durch die Verbesserung der Signalqualität kann das extrahierte Amplitudensignal in einer Güte vorliegen, die zu einer Verbesserung der Genauigkeit der Zahnradeingriffsfrequenz führt.

Ein zweiter Aspekt betrifft eine Vorrichtung, die zum Durchführen von Schritten des Verfahrens nach dem ersten Aspekt eingerichtet ist. Jeweilige weitere Merkmale, Ausführungsformen und Vorteile sind den Beschreibungen des ersten Aspekts zu entnehmen. Umgekehrt stellen auch Merkmale, Ausführungsformen und Vorteile des zweiten Aspekts Merkmale, Ausführungsformen und Vorteile des ersten Aspekts dar.

Ein dritter Aspekt betrifft ein Getriebe mit einer Vorrichtung, die zum Durchführen von Schritten des Verfahrens nach dem ersten Aspekt eingerichtet ist, wobei das Getriebe ein erstes Zahnrad und ein zweites Zahnrad umfasst, wobei sich das erste Zahnrad und das zweite Zahnrad im Zahnradeingriff befinden, und wobei das Getriebe zumindest ein Lager des ersten Zahnrads umfasst. Jeweilige weitere Merkmale, Ausführungsformen und Vorteile sind den Beschreibungen des ersten und zweiten Aspekts zu entnehmen. Umgekehrt stellen auch Merkmale, Ausführungsformen und Vorteile des dritten Aspekts Merkmale, Ausführungsformen und Vorteile des ersten und zweiten Aspekts dar.

### Kurze Beschreibung der Figuren

Figur 1 zeigt ein Flussdiagramm eines Verfahrens gemäß einer Ausführungsform und
Figur 2 zeigt eine schematische Darstellung eines Getriebes.

### Detaillierte Beschreibung von Ausführungsformen

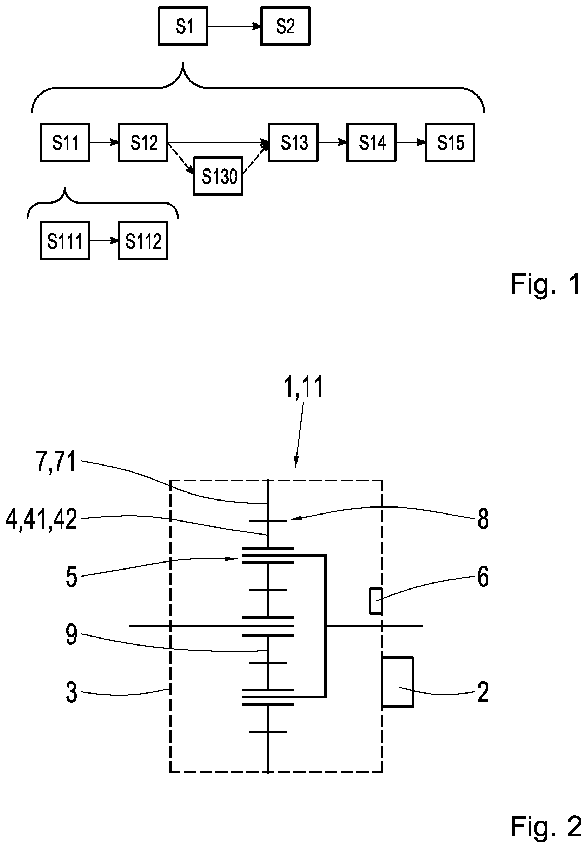

Figur 1 zeigt ein Flussdiagramm eines Verfahrens gemäß einer Ausführungsform.

Das Verfahren umfasst ein Ermitteln einer Zahnradeingriffsfrequenz S1 an einem Zahnradeingriff 8 des Zahnrads 4 des Getriebes 1 basierend auf einem Beschleunigungssignal des Getriebes 1.

Der Schritt des Ermittelns der Zahnradeingriffsfrequenz S1 umfasst ein Filtern des Beschleunigungssignals S11.

In der in Figur 1 gezeigten Ausführungsform ist das Filtern des Beschleunigungssignals S11 ein Bandpassfiltern. Der gefilterte Bereich des Bandpassfilters hängt von einem verwendeten Getriebe 1 ab. Vorliegend filtert der Bandpassfilter Frequenzen im Bereich 100 Hz bis 1500 Hz. Somit wird nur dieser Frequenzbereich für die weitere Verarbeitung des Signals betrachtet. Das Filtern des Beschleunigungssignals S11 umfasst ein Ermitteln eines Effektivwertsignals S111 des Beschleunigungssignals und ein Filtern des Effektivwertsignals S112.

Weiterhin umfasst das Verfahren ein Zerlegen des gefilterten Beschleunigungssignals S12 in ein Phasensignal und ein Amplitudensignal und ein Extrahieren des Amplitudensignals S13 basierend auf dem zerlegten Beschleunigungssignal. Zudem umfasst das Verfahren ein Ermitteln des Frequenzspektrums S14 des extrahierten Amplitudensignals und ein Ermitteln der Zahnradeingriffsfrequenz S15 basierend auf dem ermittelten Frequenzspektrum.

Das Zerlegen des gefilterten Beschleunigungssignals S12 in ein Phasensignal und ein Amplitudensignal ist eine Hilbert Transformation des gefilterten
Beschleunigungssignals. Vor dem Schritt des Extrahierens des Amplitudensignals S13 erfolgt ein Schritt der Signalaufbereitung durch Addieren S130 des gefilterten Beschleunigungssignals und des zerlegten Beschleunigungssignals. Hierdurch wird die Signalqualität verbessert. Der Schritt der Signalaufbereitung durch Addieren S130 ist optional, wie anhand der gestrichelten Pfeile zwischen den Schritten S12 und S13 im Flussdiagramm in Figur 1 zu erkennen. Das Extrahieren des Amplitudensignals S13 basierend auf dem zerlegten Beschleunigungssignal ist ein Bestimmen des Absolutwerts des zerlegten Beschleunigungssignals. Somit wird eine Hüllkurve des zerlegten Beschleunigungssignals erhalten. Die Hüllkurve beschreibt Impulsereignisse des zerlegten Beschleunigungssignals. Das Ermitteln des Frequenzspektrums S14 ist ein Anwenden einer schnellen Fourier-Transformation basierend auf dem Absolutwert. Hierdurch wird die Verteilung von Frequenzkomponenten des Absolutwerts ermittelt. Das Ermitteln der Zahnradeingriffsfrequenz S15 basierend auf dem ermittelten Frequenzspektrum ist ein Ermitteln der Zahnradeingriffsfrequenz basierend auf einer Ausgabe der schnellen Fourier-Transformation. Die Verteilung von Frequenzkomponenten wird somit zum Ermitteln der Zahnradeingriffsfrequenz S15 genutzt.

Weiterhin umfasst das Verfahren ein Ermitteln einer Belastung des Lagers S2 basierend auf der ermittelten Zahnradeingriffsfrequenz und einem Referenzwert. Der Referenzwert ist eine ermittelte Zahnradeingriffsfrequenz, die zu Beginn eines Betriebs des Getriebes 1 erfasst wird. Anschließend wird der Referenzwert in einer Datenbank lesbar abgespeichert. Beim Ermitteln der Belastung des Lagers S2 wird die ermittelte Zahnradeingriffsfrequenz mit dem Referenzwert verglichen. Wenn hierbei eine Abweichung festgestellt wird, ist dies indikativ für ein untypisches Lagerverhalten und somit eine Lagerbeschädigung. Hierbei ist das Maß der Abweichung ein Indikator für die schwere der Belastung.

Figur 2 zeigt eine schematische Darstellung eines Getriebes 1 in Form eines Planetengetriebes 11.

Das Planetengetriebe 11 umfasst eine Vorrichtung 2, die zum Durchführen von Schritten des oben beschriebenen Verfahrens eingerichtet ist. Weiterhin umfasst das Planetengetriebe 11 ein erstes Zahnrad 41 in Form eines Planetenrads 42, ein zweites Zahnrad 7 in Form eines Hohlrads 71, und ein Sonnenrad 9. Außerdem umfasst das Planetengetriebe 11 einen Beschleunigungssensor 6, der an einem Gehäuse 3 des Planetengetriebes 11 angeordnet ist.

Das Hohlrad 71 befindet sich im Zahnradeingriff 8 mit dem Planetenrad 42. Das Planetenrad 42 befindet sich ebenfalls in einem Zahnradeingriff mit dem Sonnenrad 9.

Der Beschleunigungssensor 6 erfasst ein Beschleunigungssignal, das eine Beschleunigung einer Schwingung an dem Gehäuse 3 des Getriebes 1 repräsentiert. Hierbei ist der Beschleunigungssensor 6 so am Gehäuse 3 angeordnet, dass das erfasste Signal repräsentativ für die Schwingung am Zahnradeingriff 8 von dem Hohlrad 71 und dem Planetenrad 42 ist.

Die Vorrichtung 2 kann das vom Beschleunigungssensor 6 erfasste Beschleunigungssignal erhalten und gemäß dem in Figur 1 beschriebenen Verfahren verarbeiten, um eine Belastung des Lagers 5 des Planetenrads 42 zu ermitteln.

### Bezugszeichen

- 1: Getriebe
- 11: Planetenradgetriebe
- 2: Vorrichtung
- 3: Gehäuse
- 4: Zahnrad
- 41: Erstes Zahnrad
- 42: Planetenrad
- 5: Lager
- 6: Beschleunigungssensor
- 7: Zweites Zahnrad
- 71: Hohlrad
- 8: Zahnradeingriff
- 9: Sonnenrad

- S1: Ermitteln einer Zahnradeingriffsfrequenz basierend auf einem Beschleunigungssignal
- S2: Ermitteln einer Belastung des Lagers
- S11: Filtern des Beschleunigungssignals
- S12: Zerlegen des gefilterten Beschleunigungssignals
- S13: Extrahieren des Amplitudensignals
- S14: Ermitteln des Frequenzspektrums
- S15: Ermitteln der Zahnradeingriffsfrequenz basierend auf dem ermittelten Frequenzspektrum
- S111: Ermitteln eines Effektivwertsignals
- S112: Filtern des Effektivwertsignals
- S130: Signalaufbereitung durch Addieren

## Patentansprüche

1. Verfahren zum Ermitteln von einer Belastung an einem Lager (5) eines Zahnrads (4) eines Getriebes (1), umfassend die Schritte:
Ermitteln einer Zahnradeingriffsfrequenz (S1) an einem Zahnradeingriff (8) des Zahnrads (4) des Getriebes (1) basierend auf einem Beschleunigungssignal des Getriebes (1); und
Ermitteln einer Belastung des Lagers (S2) basierend auf der ermittelten Zahnradeingriffsfrequenz und einem Referenzwert.

2. Verfahren nach Anspruch 1, **dadurch gekennzeichnet, dass** das Beschleunigungssignal eine Beschleunigung einer Schwingung an einem Gehäuse (3) des Getriebes (1) ist.

3. Verfahren nach einem der vorrangegangenen Ansprüche, **dadurch gekennzeichnet, dass** der Zahnradeingriff (8) ein Zahnradeingriff eines Planetenrads (42) eines Planetengetriebes (11) mit einem Hohlrad (71) des Planetengetriebes (11) und das Lager (5) ein Lager des Planetenrads (42) ist.

4. Verfahren nach einem der vorrangegangenen Ansprüche, **dadurch gekennzeichnet, dass** das Ermitteln der Zahnradeingriffsfrequenz (S1) die Schritte umfasst:
Filtern des Beschleunigungssignals (S11);
Zerlegen des gefilterten Beschleunigungssignals (S12) in ein Phasensignal und ein Amplitudensignal;
Extrahieren des Amplitudensignals (S13) basierend auf dem zerlegten Beschleunigungssignal;
Ermitteln des Frequenzspektrums (S14) des extrahierten Amplitudensignals; und
Ermitteln der Zahnradeingriffsfrequenz (S15) basierend auf dem ermittelten Frequenzspektrum.

5. Verfahren nach Anspruch 4, **dadurch gekennzeichnet, dass** das Filtern des Beschleunigungssignals (S11) ein Bandpassfiltern des Beschleunigungssignals ist;
wobei das Zerlegen des gefilterten Beschleunigungssignals (S12) in ein Phasensignal und ein Amplitudensignal eine Hilbert Transformation des gefilterten Beschleunigungssignals ist;
wobei das Extrahieren des Amplitudensignals (S13) basierend auf dem zerlegten Beschleunigungssignal ein Bestimmen des Absolutwerts des zerlegten Beschleunigungssignals ist;
wobei das Ermitteln des Frequenzspektrums (S14) ein Anwenden einer schnellen Fourier-Transformation basierend auf dem Absolutwert ist; und
wobei das Ermitteln der Zahnradeingriffsfrequenz (S15) basierend auf dem ermittelten Frequenzspektrum ein Ermitteln der Zahnradeingriffsfrequenz basierend auf einer Ausgabe der schnellen Fourier-Transformation ist.

6. Verfahren nach einem der Ansprüche 4 oder 5, **dadurch gekennzeichnet, dass** das Filtern des Beschleunigungssignals (S11) ein Ermitteln eines Effektivwertsignals (S111) des Beschleunigungssignals und ein Filtern des Effektivwertsignals (S112) umfasst.

7. Verfahren nach einem der Ansprüche 4 bis 6, **dadurch gekennzeichnet, dass** vor dem Schritt des Extrahierens des Amplitudensignals (S13) ein Schritt der Signalaufbereitung durch Addieren (S130) des gefilterten Beschleunigungssignals und des zerlegten Beschleunigungssignals erfolgt.

8. Vorrichtung (2), die zum Durchführen von Schritten des Verfahrens nach einem der Ansprüche 1 bis 7 eingerichtet ist.

9. Getriebe (1) mit einer Vorrichtung (2), die zum Durchführen von Schritten des Verfahrens nach einem der Ansprüche 1 bis 7 eingerichtet ist, wobei das Getriebe (1) ein erstes Zahnrad (4) und ein zweites Zahnrad (7) umfasst, wobei sich das erste Zahnrad (4) und das zweite Zahnrad (7) im Zahnradeingriff (8) befinden, und wobei das Getriebe (1) zumindest ein Lager (5) des ersten Zahnrads (4) umfasst.
